# EUROPÄISCHE PATENTSCHRIFT

(11) **EP 3 592 611 B1**
(45) Veröffentlichungstag und Bekanntmachung des Hinweises auf die Patenterteilung: **16.06.2021**
(21) Anmeldenummer: 18707031.3
(22) Anmeldetag: 22.02.2018
(51) Int. Cl.: B60R 16/03, H02J 7/14, H02J 9/06

(54) **NUTZFAHRZEUG UND VERFAHREN ZUM BETREIBEN EINES NUTZFAHRZEUGES**
UTILITY VEHICLE AND METHOD FOR OPERATING A UTILITY VEHICLE
VÉHICULE UTILITAIRE ET PROCÉDÉ DE FONCTIONNEMENT D'UN VÉHICULE UTILITAIRE

(30) Priorität: 06.03.2017 DE 102017104667
(43) Veröffentlichungstag der Anmeldung: 15.01.2020
(73) Patentinhaber: KNORR-BREMSE Systeme für Nutzfahrzeuge GmbH, 80809 München (DE)
(72) Erfinder: MILLER, Bernhard, 71263 Weil der Stadt (DE); HECKER, Falk, 71706 Markgröningen (DE)
(86) Internationale Anmeldenummer: PCT/EP2018/054440
(87) Internationale Veröffentlichungsnummer: WO 2018/162248

(56) Entgegenhaltungen:
- DE-A1-102005 004 330
- DE-A1-102011 002 264
- DE-A1-102013 225 020
- DE-A1-102014 219 133

## Beschreibung

Die vorliegende Erfindung bezieht sich auf eine Stromversorgungseinheit für ein Nutzfahrzeug sowie auf ein Verfahren zum Betreiben einer Stromversorgungseinheit für ein Nutzfahrzeug gemäß den Hauptansprüchen.

In modernen Nutzfahrzeugen ist oftmals die Lichtmaschine oder Generator genannt zum Aufladen der Fahrzeugbatterie als elektrischer Energiespeicher vorgesehen. Die Aufgabe dieses elektrischen Energiespeichers besteht darin, ein Bordnetzs des Nutzfahrzeugs mit sehr vielen unterschiedlichen elektrischen Verbrauchern wie beispielsweise Systemen zur Fahrzeugführung, die Motorsteuerung, eine Einspritzanlage, einen Anlasser oder Lenkgetriebemotoren zu stabilisieren und mit elektrischer Energie zu versorgen. Tritt nun ein Defekt an diesem elektrischen Energiespeicher oder dem Bordspannungsnetz auf, führt dies zu einem Komplettausfall der Bordnetzversorgung, was wiederum zu sicherheitskritischen Fahrsituationen führt, da in diesem Fall ein Ausfall der Fahrzeugführungsfunktionen, der Lenkungseinheit, der Bremseinheit, der Motorsteuerung und letztendlich der Ausfall des Fahrzeugmotors zu befürchten ist. Ein solcher Defekt kann beispielsweise in einem Kurzschluss dieses elektrischen Energiespeichers oder zwischen Leitungen des Bordnetzes bestehen, wobei dann auch ein den elektrischen Energiespeicher ladender Generator direkt von einem solchen Defekt betroffen ist und durch diesen Defekt ebenfalls beschädigt werden kann. Ein solcher Defekt ist zwar selten, tritt er jedoch auf, sind die Folgen eines solchen Defekts extrem kritisch für die Sicherheit des in Fahrt befindlichen Nutzfahrzeugs und in Folge auch für die Verkehrsteilnehmer, die sich im unmittelbaren Umfeld dieses Nutzfahrzeug befinden.

Die Druckschrift DE 10 2005 004 330 A1 offenbart ein Bordnetz für sicherheitsrelevante Verbraucher.

Die Druckschrift DE 10 2014 219 133 A1 offenbart ein Bordnetz.

Die Druckschrift DE 10 2013 225 020 A1 offenbart ein Bordnetz zur fehlertoleranten und redundanten Versorgung.

Die Druckschrift DE 10 2011 002264 A1 offenbart eine Leistungsversorgungseinheit mit einer Vielzahl von Akkumulatoren.

Vor diesem Hintergrund wird mit der vorliegenden Erfindung eine Möglichkeit zur Verbesserung der Fahrzeugsicherheit geschaffen.

Diese Aufgabe wird durch den Gegenstand der unabhängigen Patentansprüche gelöst.

Der hier vorgestellte Ansatz schafft eine Stromversorgungseinheit für ein Nutzfahrzeug, wobei die Stromversorgungseinheit die folgenden Merkmalen aufweist:
- einen elektrischen Energiespeicher;
- einen Generator,
- eine Schnittstelle zu zumindest einem elektrischen Verbraucher des Nutzfahrzeugs;
- eine Stromleitungseinheit, die ausgebildet ist, um den Energiespeicher und den Generator mit der Schnittstelle zu verbinden, wobei die Stromleitungseinheit einen Schalter zur elektrischen Trennung des Generators von der Schnittstelle aufweist;
   und
- eine Sensoreinheit, die ausgebildet ist, um einen Defekt in dem elektrischen Energiespeicher und/oder in zumindest einer Leitung der Stromleitungseinheit und/oder dem Generator zu erkennen und ansprechend auf den erkannten Defekt den Schalter anzusteuern, um den Generator von der Schnittstelle zur trennen, insbesondere wobei der elektrische Energiespeicher mit der Schnittstelle elektrisch verbunden bleibt.

Unter einem elektrischen Energiespeicher kann ein Energiespeicher verstanden werden, der Energie in elektrochemischer, elektrischer oder elektromagnetischer Form speichern kann. Unter einem Generator kann beispielsweise eine elektrische Synchronmaschine oder Asynchronmaschine verstanden werden. Der Generator kann von einem Antriebsmotor des Nutzfahrzeugs angetrieben werden und/oder kann mit einer Abtriebswelle dieses Antriebsmotors des Nutzfahrzeugs gekoppelt werden oder gekoppelt sein. Unter einer Stromleitungseinheit kann eine Einheit verstanden werden, die verschiedene elektrische Leitungen aufweist, um den elektrischen Energiespeicher und/oder den Generator mit der Schnittstelle zu verbinden. Unter einem Schalter kann ein elektrisches oder elektromechanisches Element verstanden werden, um eine elektrisch leitfähige Verbindung zwischen dem Generator und der Schnittstelle zu unterbrechen oder herzustellen. Insbesondere kann dabei durch den Schalter ein Schaltzustand der Stromleitungseinheit erreicht werden, in welchem trotz der elektrischen Trennung des Generators von der Schnittstelle noch der elektrische Speicher elektrisch leitfähig mit der Schnittstelle gekoppelt ist. Unter einer Sensoreinheit kann eine Messeinheit verstanden werden, die beispielsweise einen inneren Widerstand des Generators und/oder elektrischen Energiespeichers und/oder einen Stromfluss in zumindest der einen Leitung der Stromleitungseinheit als Messwert erfasst oder einen solchen Messwert einliest und auswertet, wobei der Schalter entsprechend angesteuert wird, wenn der Messwert ein vorbestimmtes Kriterium erfüllt, beispielsweise einen zu geringen oder zu hohen inneren Widerstand des Generators und/oder einen zu hohen Stromfluss in der einen Leitung der Stromleitungseinheit repräsentiert. In diesem Fall kann die Sensoreinheit auf einen Defekt in dem elektrischen Energiespeicher und/oder in der zumindest einen Leitung der Stromleitungseinheit bzw. dem Generator rückschließen.

Der hier vorgestellte Ansatz basiert auf der Erkenntnis, dass durch die Verwendung des von der Sensoreinheit angesteuerten Schalters eine zuverlässige elektrische Trennung des Generators von der Schnittstelle ermöglicht wird. Eine solche Ausführung der Stromversorgungseinheit bietet den Vorteil, dass bei einem zwar selten auftretenden aber dennoch in Betracht zu ziehenden Defekt im Generator ein Totalausfall des Bordnetzes des Nutzfahrzeugs verhindert werden kann. Eine zweite Leitung der Stromleitungseinheit ist beispielsweise noch mit dem Generator verbunden, sodass zumindest der elektrische Energiespeicher einen oder mehrere an der Schnittstelle angeschlossene elektrische Verbraucher des Nutzfahrzeugs mit elektrischer Energie versorgen kann. Hierdurch wird die Einrichtung eines Notbetriebsmodus für das Nutzfahrzeug ermöglicht, bei dem beispielsweise ein sicheres Anhalten des Nutzfahrzeugs unter Verwendung der von dem elektrischen Energiespeicher bzw. Generator bereitgestellten elektrischen Energie in dem an der Schnittstelle angeschlossen elektrischen Verbraucher möglich wird. Auf diese Weise kann mit der hier vorgestellte Erfindung eine Möglichkeit zur Verbesserung der Fahrzeugsicherheit geschaffen werden. Im Falle eines Ausfalls des Generators durch einen Kurzschluss kann durch Öffnen der Verbindung zur Schnittstelle mithilfe des noch funktionsfähigen Energiespeichers ein weiterer Betrieb des Bordnetzes ermöglicht werden.

Gemäß einer besonders günstigen Ausführungsform des hier vorgeschlagenen Ansatzes kann der elektrische Energiespeicher als elektrochemischer Energiespeicher und/oder als Akkumulator, insbesondere als Fahrzeugbatterie des Nutzfahrzeugs, ausgebildet sein. Eine solche Ausführungsform des hier vorgeschlagenen Ansatzes bietet den Vorteil der Verwendung eines vielfach bereits in Nutzfahrzeugen vorhandenen elektrischen Energiespeichers im Rahmen der vorteilhaften Stromversorgungseinheit.

Gemäß einer weiteren Ausführungsform des hier vorgeschlagenen Ansatzes kann der Generator als Drehstromgenerator ausgebildet sein und/oder mit einer Antriebswelle eines Antriebsmotors des Nutzfahrzeugs gekoppelt oder koppelbar sein, insbesondere wobei der Generator einen Gleichrichter zur Einsprisung von Gleichstrom auf zumindest eine Leitung der Stromleitungseinheit aufweist. Eine solche Ausführungsform des hier vorgeschlagenen Ansatzes bietet den Vorteil, ein technisch ausgereiftes und kostengünstiges Bauelement als Generator verwenden zu können.

Von Vorteil ist weiterhin eine Ausführungsform des hier vorgeschlagenen Ansatzes, bei der der Schalter zumindest ein Relais und/oder ein Halbleiterschaltelement als Schaltelement aufweist. Unter einem solchen Halbleiterschaltelement kann beispielsweise ein MOSFET-Transistor, ein Thyristor, ein Triac oder dergleichen verstanden werden. Eine solche Ausführungsform des hier vorgeschlagenen Ansatzes bietet ebenfalls den Vorteil der Verwendung eines breit verfügbaren und kostengünstigen Bauelements als Schalter.

Besonders sicher und zuverlässig kann eine elektrische Trennung der Schnittstelle von dem Generator erfolgen, wenn der Schalter zumindest zwei in Reihe geschaltete Schaltelemente aufweist, insbesondere wobei die Schaltelemente unabhängig voneinander ansteuerbar sind.

Denkbar ist ferner eine Ausführungsform des hier vorgeschlagenen Ansatzes, bei der die Stromleitungseinheit zwei voneinander durch den Schalter trennbare Stromleitungen aufweist und wobei die Schnittstelle ausgebildet ist, um einen ersten der Verbraucher mit Strom aus dem elektrischen Energiespeicher zu versorgen und einen zweiten Verbraucher mit elektrischer Energie aus dem Generator zu versorgen. Eine solche Ausführungsform des hier vorgeschlagenen Ansatzes bietet eine sehr hohe Ausfallsicherheit durch die redundante (vorzugsweise exklusive) Versorgung der Verbraucher mit elektrische Energie aus dem elektrischen Energiespeicher und/oder dem Generator.

Von Vorteil ist weiterhin eine Ausführungsform des hier vorgestellten Ansatzes, bei dem die Sensoreinheit ausgebildet ist, um als Defekt einen Kurzschluss in dem elektrischen Energiespeicher und/oder einer Leitung der Stromleitungseinheit und/oder dem Generator zu erkennen.

Besonders effizient lässt sich der hier vorgeschlagene Ansatz in einem Szenario verwenden, bei dem gemäß einer Ausführungsform der hier vorgeschlagenen Stromversorgungseinheit die Sensoreinheit ausgebildet ist, um einen Überladungspannungszustand zumindest einer Leitung der Stromleitungseinheit zu erkennen, der zu einer Überladung des elektrischen Energiespeichers führt, wobei die Sensoreinheit ferner ausgebildet ist, um beim Erkennen des Überlasungszustand den Schalter derart anzusteuern, dass der Generator von dem elektrischen Energiespeicher getrennt wird. Auf diese Weise kann vorteilhaft und sehr zuverlässig ein im Hinblick auf die Verkehrssicherheit besonders kritischer Defekt erkannt und dessen Auswirkungen abgemildert werden.

Die Vorteile des hier vorgeschlagenen Ansatzes lassen sich besonders effizient in einem Nutzfahrzeug mit einer Stromversorgungseinheit gemäß einer Variante des hier vorgestellten Ansatzes umsetzen, insbesondere wobei zumindest zwei Verbraucher mit der Schnittstelle gekoppelt sind und/oder als ein Verbraucher ein Lenkgetriebemotor als Verbraucher mit der Schnittstelle gekoppelt ist.

Insbesondere eine Ausführungsform des hier vorgeschlagenen Ansatzes in der Form eines Nutzfahrzeugs ist besonders vorteilhaft implementierbar, bei dem das Nutzfahrzeug zwei lenkbare Achsen aufweist, deren Auslenkung je mittels eines Lenkgetriebemotors bewirkt wird, dadurch gekennzeichnet, dass ein Lenkgetriebemotor einer ersten der lenkbaren Achse bei geöffnetem Schalter mit elektrischer Energie von dem Generator versorgt wird und ein Lenkgetriebemotor der zweiten der lenkbaren Achsen mit dem elektrischen Energiespeicher elektrisch gekoppelt ist, insbesondere wobei die erste lenkbare Achse mechanisch mit der zweiten lenkbaren Achse gekoppelt ist, insbesondere wobei die lenkbaren Achsen derart gekoppelt sind, dass eine Lenkbewegung der ersten Achse zu einer gleichen Lenkbewegung der zweiten Achse führt. Eine solche Ausführungsform des hier vorgeschlagenen Ansatzes in der Form des Nutzfahrzeugs ermöglicht eine redundante und somit sehr sichere Ansteuerung zumindest eines Lenkgetriebemotors, sodass auch bei dem Defekt des elektrischen Energiespeichers zumindest noch über einen vom Generator mit elektrischer Energie versorgter Lenkgetriebemotor und/oder eine mechanische Kopplung der beiden lenkbaren Achsen eine rudimentäre Funktion der Lenkung ermöglicht ist, was zur deutlichen Erhöhung der Verkehrssicherheit des Nutzfahrzeugs beiträgt.

Besonders sicher, zuverlässig und somit verkehrssicher ist eine Ausführungsform des hier vorgeschlagenen Ansatzes als Nutzfahrzeug, bei dem die Schnittstelle ausgebildet ist, zumindest zwei Verbraucher mit je einer Leitung zu dem elektrischen Energiespeicher und dem Generator zu verbinden. Eine solche redundante Auslegung der Schnittstelle ermöglicht somit zuverlässig die Versorgung der zumindest zwei Verbraucher mit elektrische Energie aus dem Energiespeicher und, falls dieser ausgefallen sein sollte, aus dem Generator. Ebenso wirkt umgekehrt eine solchermaßen redundante Auslegung bei einem Kurzschluß des Generators, wobei hier der elektrische Energiespeicher die Versorgung der zumindest zwei Verbraucher für eine gewisse Zeit aufrechterhält.

Die Vorteile des hier vorgeschlagenen Ansatzes lassen sich ferner sehr einfach und effizient arbeitend in der Form eines Verfahrens zum Betreiben einer Stromversorgungseinheit gemäß einer hier vorgestellten Variante implementieren, wobei das Verfahren die folgenden Schritte aufweist:
- Erkennen eines Defekts in dem elektrischen Energiespeicher und/oder sowie dem Generator in zumindest einer Leitung der Stromleitungseinheit; und
- Ansteuern des den Schalter ansprechend auf den erkannten Defekt, um den Generator von der Schnittstelle zur trennen, insbesondere wobei der elektrische Energiespeicher mit der Schnittstelle elektrisch verbunden bleibt.

Zusätzlich oder alternativ kann auch der Generator vom defekten Bordnetz getrennt werden, um eine Versorgung von zumindest zwei Verbrauchern mit elektrischer Energie sicherzustellen, wenn das Bordnetz oder der elektrische Energiespeicher einen Kurzschluss aufweist.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes werden in der nachfolgenden Beschreibung mit Bezug zu den Figuren näher erläutert. Es zeigen:
- Figur 1: ein Blockschaltbild eines Nutzfahrzeugs mit einer Stromversorgungseinheit gemäß einem Ausführungsbeispiel;
- Figur 2: eine schematische Schaltplan-Darstellung von Komponenten der hier vorgeschlagenen Stromversorgungseinheit gemäß einem Ausführungsbeispiel;
- Figur 3: eine schematische Schaltplan-Darstellung von Komponenten der hier vorgeschlagenen Stromversorgungseinheit gemäß einem weiteren Ausführungsbeispiel;
- Figur 4: eine schematische Schaltplan-Darstellung von Komponenten der hier vorgeschlagenen Stromversorgungseinheit gemäß einem weiteren Ausführungsbeispiel;
- Figur 5: eine schematische Darstellung einer Stromversorgungseinheit gemäß einem Ausführungsbeispiel in Kombination mit speziellen Verbrauchern des Nutzfahrzeugs;
- Figur 6: eine schematische Darstellung einer Stromversorgungseinheit gemäß einem weiteren Ausführungsbeispiel in Kombination mit speziellen Verbrauchern des Nutzfahrzeugs;
- Figur 7: eine schematische Darstellung einer Stromversorgungseinheit gemäß einem weiteren Ausführungsbeispiel in Kombination mit speziellen Verbrauchern des Nutzfahrzeugs;
- Figur 8: ein Ablaufdiagramm eines Ausführungsbeispiels des hier vorgeschlagenen Ansatzes als Verfahren; und
- Figur 9: eine schematische Darstellung eines Schalters zum irreversiblen Öffnen im Fehlerfall.

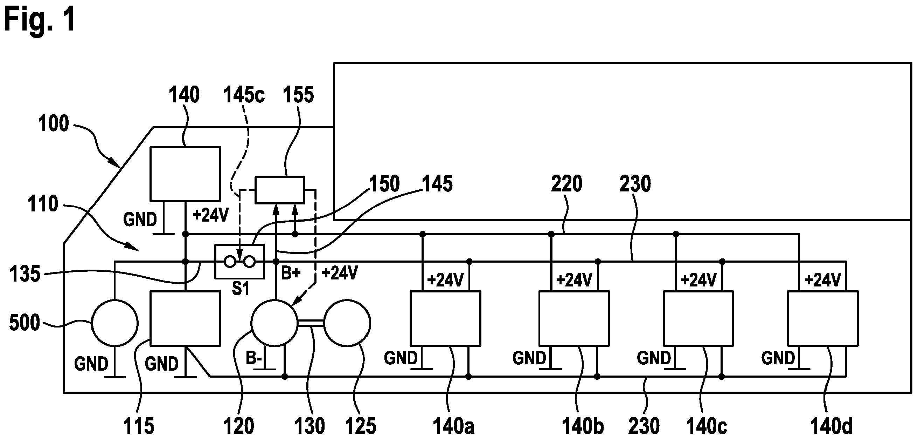

Figur 1 zeigt ein Blockschaltbild eines Nutzfahrzeugs 100 mit einer Stromversorgungseinheit 110 gemäß einem Ausführungsbeispiel. Die Stromversorgungseinheit 110 umfasst einen elektrischen Energiespeicher 115, der beispielsweise in der Form eines Ackumulators oder der Fahrzeugbatterie des Nutzfahrzeugs 100 ausgestaltet ist. Weiterhin umfasst die Stromversorgungseinheit 110 einen Generator 120, der beispielsweise mit einem Antriebsmotor 125 des Nutzfahrzeugs 100 über dessen Antriebswelle 130 gekoppelt ist. Ferner umfasst die Stromversorgungseinheit 110 eine Schnittstelle 135 zu zumindest einem elektrischen Verbraucher 140. Der elektrische Verbraucher 140 ist beispielsweise als ein Fahrzeuglenkungssystem 140a, ein Fahrerassistenzsystem 140b, eine Motorsteuereinheit 140c zur Steuerung des Antriebsmotors 125 und/oder ein Fahrzeugbremssystem 140d. ausgestaltet. Um den elektrischen Energiespeicher 115 und den Generator 120 mit der Schnittstelle 135 zu verbinden, weist die Stromversorgungseinheit 110 eine Stromleitungseinheit 145 auf, die beispielsweise mehrere Leitungen umfasst, wobei die Stromleitungseinheit 145 ferner einen Schalter 150 zur Trennung des Generators 120 von der Schnittstelle 145 aufweist. Der Schalter 150 kann beispielsweise als Relais oder als Halbleiter-Schalter ausgestaltet sein. Um den Schalter 150 im Falle eines Defekts in dem elektrischen Energiespeicher 115, des Generators 120 und/oder zumindest einer Leitung der Stromleitungseinheit 145 entsprechend anzusteuern, ist ferner eine Sensoreinheit 155 vorgesehen, um diesen Defekt in dem elektrischen Energiespeicher 115, dem Generator 120 und/oder in zumindest einer Leitung der Stromleitungseinheit 145 zu erkennen. Ansprechend auf einen solchen erkannten Defekt ist nun die Sensoreinheit 155 ausgebildet, um den Schalter 150 derart anzusteuern, dass die Schnittstelle 135 elektrisch von dem Generator 120 getrennt wird.

Durch die in Figur 1 schematisch dargestellte Stromversorgungseinheit 110 kann sichergestellt werden, dass im Falle eines Defekts in dem Generator 120 , beispielsweise einem Kurzschluss, kein Zusammenbruch der Stromversorgung in der Stromversorgungseinheit 230 zu befürchten ist, der durch beispielsweise den Kurzschluss der Ausgänge des Generators 120 auch zu einem Kurzschluss in der Fahrzeugbatterie 115 führen würde. Vielmehr kann durch das Öffnen des Schalters 150 bei einem durch die Sensoreinheit 155 erkannten Defekt in dem Generator 120 und/oder in einer Leitung der Stromleitungseinheit 145 eine Fehlerquelle in der Form des defekten Generators 120 von der Stromleitungseinheit 145 elektrisch abgetrennt werden, sodass ein verbleibendes "Rumpf"-System der Stromversorgungseinheit 230 nun die von dem elektrischen Energiespeicher 115 bereitgestellte elektrische Energie auf einen oder mehrere entsprechende elektrische Verbraucher 140a bis 140d verteilen kann. Wird der elektrische Generator 120 hinreichend groß dimensioniert, beispielsweise zur Lieferung einer Leistung von mindestens 3,5 kW, lassen sich auch Verbraucher 140 des Nutzfahrzeugs 100 zuverlässig ansteuern, die mit ausreichender Kraft mechanische Komponenten wie beispielsweise eine zweite Lenkachse 160a und eine erste Lenkachse 160b in Bewegung versetzen können. Auch wenn die Leistung des Generators 120 nicht für einen dauerhaften Betrieb des oder der Verbraucher 140 ausreicht, so kann dann zumindest ein Notbetrieb aufrechterhalten werden, indem das Nutzfahrzeug 100 in Stillstand gebracht wird und somit eine deutliche Erhöhung der Verkehrssicherheit bei dem Auftreten des Defekts im elektrischen Energiespeicher 115 oder im Bereich des Geerators 120 erreicht werden kann.

Der elektrische Energiespeicher 115 wird somit zu einer vollwertigen redundanten Stromversorgung für sicherheitskritische Systeme im Falle des Auftretens eines Defekts im Generator 120 oder dessen Bordspannungsnetz 220.

Denkbar ist ferner auch, dass der Schalter 150 nicht unmittelbar am Ausgang des Generators 120 angeordnet ist, sondern am Energiespeicher 115, wobei jedoch sichergestellt sein sollte, dass im Fall des geöffneten Schalters der Generator 120 zuverlässig elektrische Energie an die Schnittstelle 135 liefern kann.

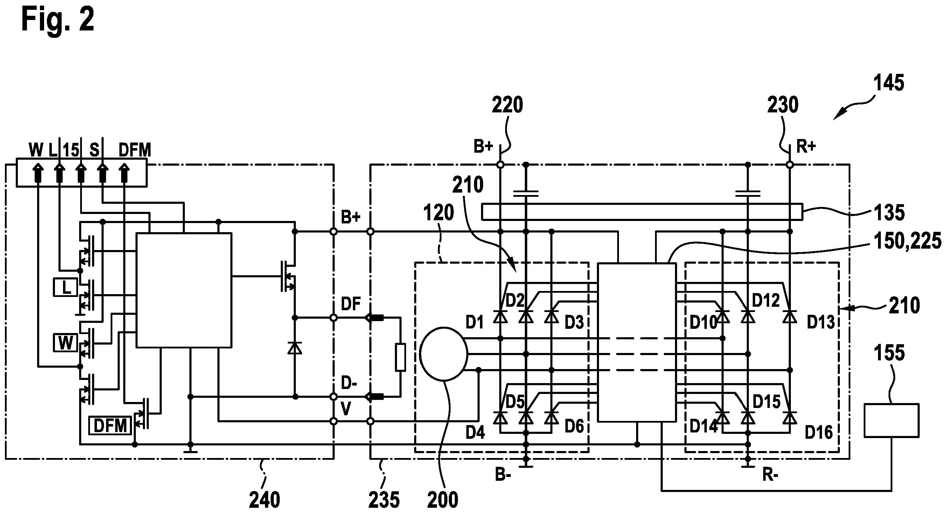

Figur 2 zeigt eine schematische Schaltplan-Darstellung von Komponenten der hier vorgeschlagenen Stromversorgungseinheit 110 gemäß einem Ausführungsbeispiel. Hierbei wird aus der Figur 2 ersichtlich, dass der Generator 120 eine Synchron- oder Asynchronmaschine 200 aufweisen kann, die eine dreiphasige Spannung an einen Gleichrichter 210 liefert, welches über entsprechend gesteuerte Gleichrichterelemente D1 bis D16 wie beispielsweise Thyristoren (oder Dioden) aus dem von der Maschine 200 gelieferten Wechselstrom in Gleichstrom umformt, welcher über Leitungen 220 bzw. 230 (hier mit B+ und R+ bezeichnet) der Stromleitungseinheit 145 weitergeleitet und beispielsweise zur Ladung des Energiespeichers 115 verwendet werden kann. Um eine elektrische Trennung der Leitungen 220 von dem Generator bzw. dem elektrischen Energiespeicher 115 zu ermöglichen, ist eine Schaltersteuereinheit 225 vorgesehen, die eine Ansteuerung der Gleichrichterelemente D1 bis D16 durchführen kann, sodass beispielsweise diese Gleichrichterelemente D1 bis D16 in einen Sperrmodus geschaltet werden, in dem kein Stromfluss über diese Gleichrichterelemente möglich ist. Hierbei ist anzumerken, dass die Gleichrichterelemente, die in zwei Gruppen D1 bis D6 und D10 bis D16 angerondet sind, dem Generator 120 zugeordnet werden können, auch wenn aus darstellungstechnischen Gründen die zweite Gruppe D10 bis D16 der Gleichrichterelemente auf einer anderen Seite der Schaltersteuereinheit 225 angeordnet ist, als die erste Gruppe von Gleichrichterelementen D1 bis D6.

Hierbei ist der links der Schaltersteuereinheit 225 dargestellte Zweig zwischen den Anschlüssen B+ und B- (d. h., der Zweig mit den Dioden D1 bis D6) vorgesehen, um eine elektrische Verbindung zum Energiespeicher 115, respektive der Batterie herzustellen und die rechts der Schaltersteuereinheit 225 dargestellter Zweig zwischen den Anschlüssen R+ und R- (d. h., der Zweig mit den Dioden D10 bis D16) vorgesehen, um zumindest einen Verbraucher mit elektrischer Energie zu versorgen. Insofern kann die mit Bezug zur Figur 1 dargestellte Schnittstelle 135 in der Fig. 2 als Übergabebereich zwischen dem Leitungen aus dem Generator bzw. den beiden Gruppen der Gleichrichterelemente D1 bis D16 und dem Anschlüssen B+ bzw. R+ betrachtet werden.

Die Schaltersteuereinheit 225 kann weiterhin eine Ausgangsüberwachung der Leitungen 220 bzw. 230 zur Abschaltung zumindest eines Ausgangs des Generator 120 bzw. des elektrischen Energiespeichers 115 durchführen, beispielsweise im Falle eines von der Sensoreinheit 155 ermittelten Kurzschlusses im Energiespeicher 115, im Generator 120 oder eines Auftretens einer Überspannung (Load Dump) in den Leitungen 220 der Stromleitungseinheit 145 und somit die Gefahr einer möglichen Beschädigung des Energiespeichers 115, eines Verbrauchers 140 oder des Generators 120.

Der Generator 120, die Schaltersteuereinheit 225 sowie die Schnittstelle 135 können zur Bauraum-sparenden Ausführung auch als Kombinationseinheit 235 zusammengefasst und als einzelnes integriertes Bauelement implementiert sein.

Weiterhin kann ein Generatorregler 240 vorgesehen sein, der eine Steuerung oder Regelung des Betriebs der Maschine 200 ermöglicht. Die Sensoreinheit 155 kann hierbei auch Teil des Gleichrichters 210 bzw. dessen Steuerungseinheit sein. In diesem Fall kann der Schalter 150 auch durch die entsprechende Ansteuerung der Gleichrichterelemente die der Dioden oder Thyristoren D1 bis D16 implementiert sein. Es sollte hierbei jedoch durch die Schaltungstopologie sichergestellt sein, dass bei einer Abschaltung Gleichrichterelemente D1 bis D16 noch elektrische Energie zum Betrieb eines Verrauchers 140 an die Schnittstelle 135 übertragen wird; es sollten somti nicht alle Geleichrichterelemente gleichzeitig in den Sperrmodus geschaltet werden.

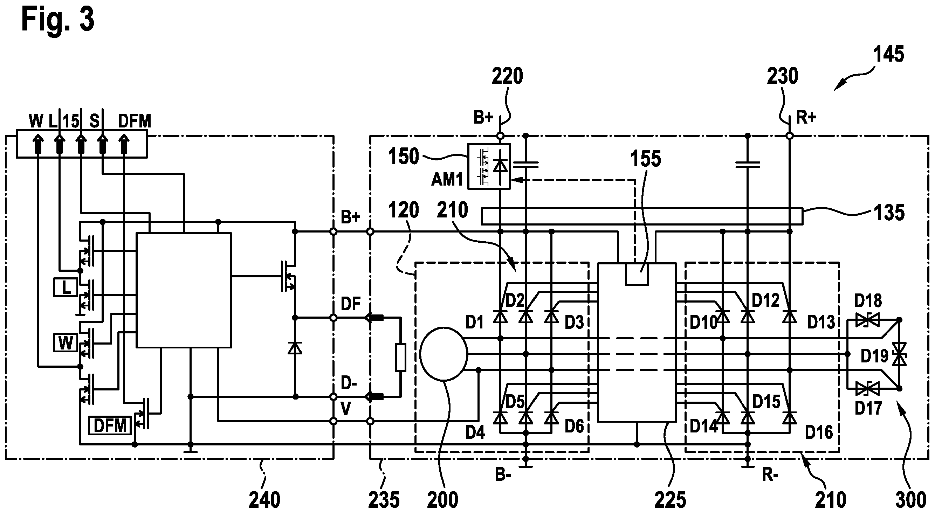

Figur 3 zeigt eine schematische Schaltplan-Darstellung von Komponenten der hier vorgeschlagenen Stromversorgungseinheit 110 gemäß einem weiteren Ausführungsbeispiel. Die in der Figur 3 dargestellte Schaltungstopologie der Komponenten der Stromversorgungseinheit 110 entspricht im Wesentlichen der bereits mit Bezug zur Figur 2 dargestellten Schaltungstopologie, wobei jedoch nun die Sensoreinheit 155 direkt in der Schaltersteuereinheit 225 integriert ist und einen separat vorgesehenen Schalter 150 in der Form eines Abschaltmoduls AM1 unmittelbar am Ausgang der Leitung B+ ansteuert. Dieser Schalter 150 in der Form des Abschaltmoduls AM1, hier beispielsweise in der Form einer schatlbaren Doide bzw. eines Thyristors, sorgt für ein sicheres Abtrennen des Energiespeichers 150 in der Form der Fahrzeugbatterie vom Generator 120 im Fehlerfall, selbst einen Kurzschluss an den Gleichrichterelementen D1 bis D6. Weiterhin sind einige Supressordioden D17 bis D19 in der Diodenschaltungsanordnung 300 gemäß der Darstellung aus Figur 3 angeordnet, welche als Überspannungsschutz (Load Dump) zur Vermeidung eines Überladens des Energiespeichers 115 vorgesehen sind.

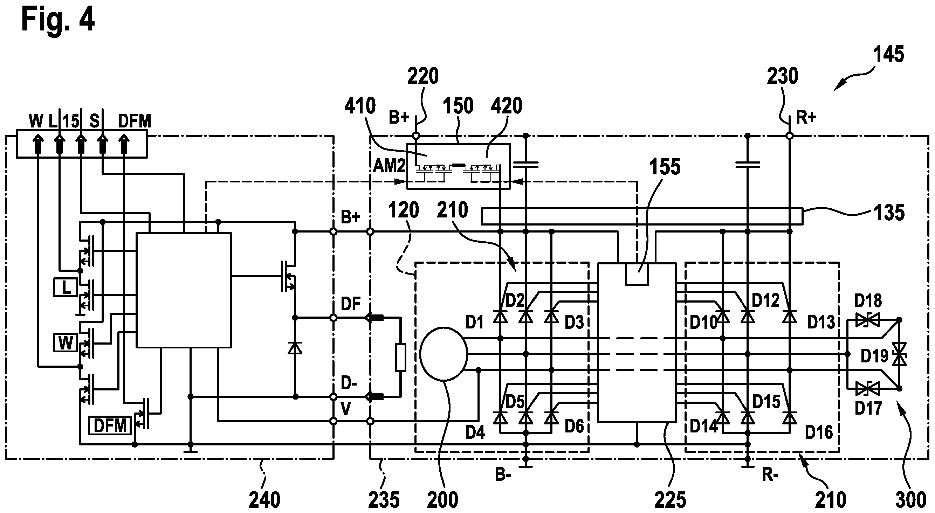

Figur 4 zeigt eine schematische Schaltplan-Darstellung von Komponenten der hier vorgeschlagenen Stromversorgungseinheit 110 gemäß einem weiteren Ausführungsbeispiel. Die in der Figur 3 dargestellte Schaltungstopologie der Komponenten der Stromversorgungseinheit 110 entspricht im Wesentlichen der bereits mit Bezug zur Figur 3 dargestellten Schaltungstopologie, wobei jedoch nun der Schalter 150 in der Form eines alternativen Abschaltungsmoduls AM2 ausgestaltet ist, bei der zwei getrennt ansteuerbare Schaltelemente 410 und 420 vorgesehen sind. Die Schaltelemente 410 und/oder 420 können hierbei als Relais und/oder als Halbleiterschaltelement ausgestaltet sein, wie dies in der Figur 4 beispielhaft in der Form eines MOSFET-Transistors als Leistungselektronik-Bauelement dargestellt ist. Das erste Schaltelement 420 kann hierbei beispielsweise von dem Generatorregler 240 angesteuert werden, wogegen das zweite Schaltelement 420 von der Sensoreinheit 155 angesteuert wird. Sobald eines der Schaltelemente 410 bzw. 420 in den geöffneten Zustand gebracht wird, wird somit eine Übertragung von elektrischer Energie über den Schalter 150 unterbunden, sodass die an den Leitungen 220 angeschlossene Batterie bzw. der elektrische Energiespeicher 115 vom Generator 120 getrennt ist. Auf diese Weise kann sehr zuverlässig sichergestellt werden, dass im Fehlerfall, beispielsweise bei der Erkennung eines Defekts eine Trennung der elektrischen Verbindung zum Energiespeicher 115 durchgeführt wird.

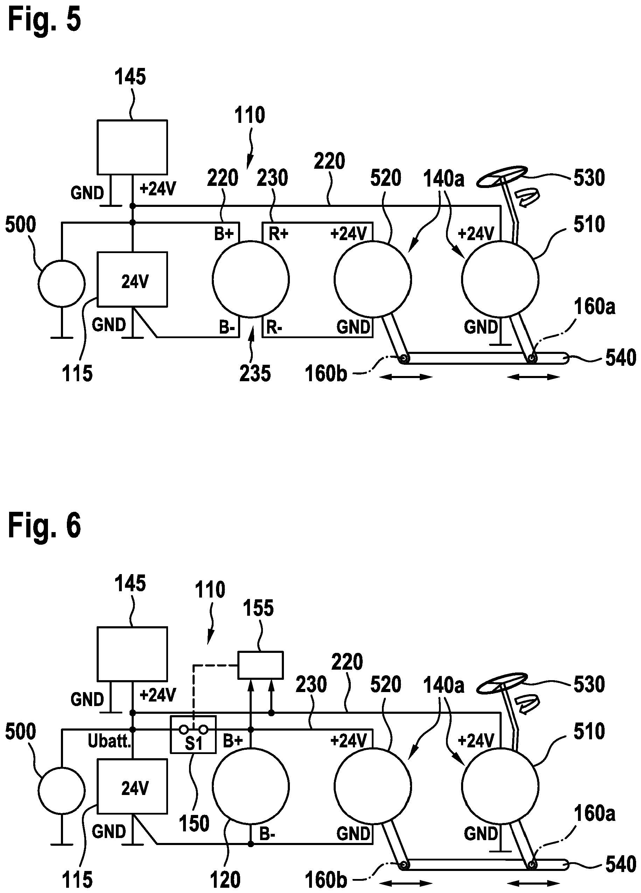

Figur 5 zeigt eine schematische Darstellung einer Stromversorgungseinheit 110 gemäß einem Ausführungsbeispiel in Kombination mit speziellen Verbrauchern des Nutzfahrzeugs 100. Insbesondere ist in der Figur 5 ein Energiespeicher 115 in der Form der Fahrzeugbatterie, beispielsweise mit 24 Volt Betriebsspannung, dargestellt, welche über die Stromleitungseinheit 145 mit einem Anlasser 500 des Nutzfahrzeugs und dem Generator 120 des Nutzfahrzeugs verbunden ist, der beispielsweise entsprechend den Darstellungen aus den Figuren 2 bis 4 als Drehstromgenerator ausgebildet ist und elektrische Energie über den Anschluss zwischen B+ und B- sowie den Anschluss zwischen R+ und R- ausgeben kann. Der Anschluss zwischen R+ und R- kann dabei ebenfalls als zur Stromleitungseinheit 145 gehörig verstanden werden, da vorliegend als Stromleitungseinheit 145 die zur Übertragung von elektrischer Energie erforderliche Infrastruktur des Nutzfahrzeugs 100 verstanden werden kann.

Gemäß der in der Figur 5 dargestellten Schaltungstopologie ist der Energiespeicher 115 zur Versorgung eines ersten Lenkgetriebemotors 510 mit elektrischer Energie als erster Verbraucher ausgebildet, wobei der Generator in der Kombinationseinheit 235 zur Versorgung eines zweiten Lenkgetriebemotors 520 mit elektrischer Energie als zweiter Verbraucher ausgebildet ist. Der erste Lenkgetriebemotor 510 kann beispielsweise eine Leistung von 3kW abgeben und eine Auslenkung einer ersten von zwei Lenkachsen 160 vornehmen. Beispielsweise kann auch der erste Lenkgetriebemotor 510 Ansteuersignale von einem Lenkrad bzw. einer Lenkeinheit 530 von einem Fahrer des Nutzfahrzeugs 100 empfangen und in ein entsprechendes Lenkmoment oder in einen entsprechenden Lenkwinkel und somit in eine Auslenkung der ersten Lenkachse 160 übersetzen. Der zweite Lenkgetriebemotor 520 ist beispielsweise ausgebildet, um eine zweite der Lenkachsen 160auszulenken (beispielsweise ebenfalls unter Verwendung von Lenksignalen aus der Lenkeinheit 530, was jedoch aus Gründen der Übersichtlichkeit in der Figur 5 nicht näher dargestellt ist) und kann hierzu beispielsweise ebenfalls eine Leistung von 3kW abgeben. Im vorliegenden Ausführungsbeispiel, welches in der Figur 5 schematisch dargestellt ist, sind die beiden Lenkachsen 160 mit einer Lenkstange 540 gekoppelt, sodass eine Auslenkung der ersten Lenkachse 160a auch zu einer entsprechenden Auslenkung der zweiten Lenkachse 160b führt und umgekehrt.

Die zweite Lenkachse 160b, die beispielsweise eine Nachlaufachse bildet, wird somit von dem zweiten Lenkgetriebemotor 520 ausgelenkt, der direkt vom zweiten Ausgang (d. h., dem Ausgang mit den Anschlüssen R+ und R-) des Generators 120 der Kombinationseinheit 235 mit elektrischer Energie versorgt wird. Auf diese Weise kann sichergestellt werden, dass bei einem Defekt im Energiespeicher 115, des Generators 120 oder einer Leitung der Stromleitungseinheit 145, die direkt mit dem Energiespeicher 115 verbunden ist, kein Totalausfall der Lenkbarkeit des Nutzfahrzeugs 100 zu befürchten ist, da zumindest der zweite Lenkgetriebemotor 520 durch die Abkopplung des Energiespeichers 115 bzw. des Generators 120 in der Kombinationseinheit 235 entsprechend den Figuren 2 bis 4 noch zuverlässig mit elektrischer Energie versorgt werden kann. Zusätzlich kann durch die Lenkstange 540 sichergestellt werden, dass die Auslenkung der zweiten Lenkachse 160b auch in eine entsprechende Auslegung der ersten Lenkachse 160a überführt wird und somit noch eine Lenkung des Fahrzeugs 100 auch bei Ausfall oder Defekt des Energiespeichers 115 möglich ist. Der hier vorgeschlagene Ansatz bietet ferner die Einsparung einer teuren hydraulischen Alternativlösung durch eine intelligente Trennung von unterschiedlichen Leitungen der Stromleitungseinheit 145.

Eine Kurzschlusserkennung eines Kurzschlusses im Energiespeicher 115, beispielsweise durch den Abfall der Spannung der Fahrzeugbatterie und/oder im Bordnetz der Stromleitungseinheit 145 oder im Generator 120 kann somit durch die Sensoreinheit 155 in oder an der Kombinationseinheit 235 erfolgen, sodass das elektrische Abtrennen des Generators 120 von der Batterie bzw. dem Energiespeicher 115 zuverlässig durchgeführt werden kann. Hierbei können die entsprechenden erforderlichen Komponenten zusammen in einer kompakt auszuführenden Kombinationseinheit 235 zusammengefasst und somit Bauraum-sparend untergebracht werden. Eine solche Kombinationseinheit 235 weist beispielswseise zwei separate Ausgänge B+/- bzw. R+/- auf, über welche unterschiedliche Teilzweige der Stromleitungseinheit 145 mit elektrischer Energie beaufschlagt werden können.

Figur 6 zeigt eine schematische Darstellung einer Stromversorgungseinheit 110 gemäß einem weiteren Ausführungsbeispiel in Kombination mit speziellen Verbrauchern des Nutzfahrzeugs 100. Im Unterschied zu der in Figur 5 dargestellten Schaltungstopologie der Komponenten der Stromversorgungseinheit 110 ist nun keine Kombinationseinheit 235 wie in der Darstellung aus Figur 5 vorgesehen, sondern die Sensoreinheit 155 sowie der Schalter 150 sind nun separat zum Generator 120 ausgestaltet bzw. angeordnet. Erkennbar ist jedoch wiederum, dass der Schalter 150 eine elektrische Abtrennung des zweiten Lenkgetriebemotors 520 vom Energiespeicher 115 bzw. Generator 120 ermöglicht, wenn beispielsweise durch die Sensoreinheit 155 ein Defekt im Energiespeicher 115 oder im Generator 120 oder ein Spannungsabfall auf Leitungen der Stromleitungseinheit 145 ermittelt wird.

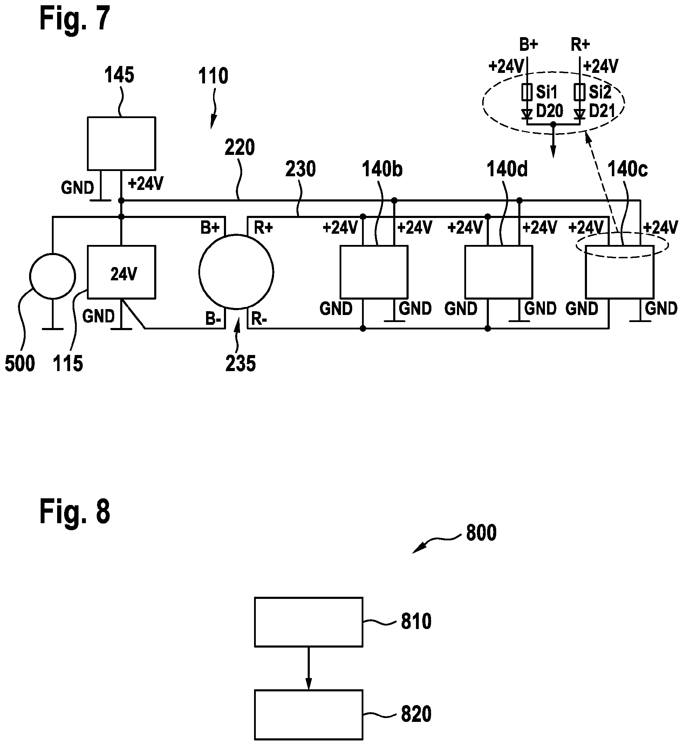

Figur 7 zeigt eine schematische Darstellung einer Stromversorgungseinheit 110 gemäß einem weiteren Ausführungsbeispiel in Kombination mit speziellen Verbrauchern des Nutzfahrzeugs 100. Im Unterschied zu der Figur 5 ist nun eine redundante Energieversorgung der Verbraucher durch sowohl den Energiespeicher 115 als auch den Generator 120 in der Einheit 135 vorgesehen. Beispielsweise können die Verbraucher 160 nicht nur als die in den Figuren 5 und 6 dargestellten Lenkgetriebemotoren 510 und 520 ausgestaltet sein, sondern alternativ und/oder zusätzlich auch als Einheiten zur Fahrzeug-Führung wie beispielsweise einem Fahrerassistenzsystem 140b, einer Motorsteuerungseinheit 140c und/oder einer Steuereinheit 140d für eine Fahrzeugbremse ausgestaltet sein. Auf diese Weise lässt sich eine redundante Stromversorgung für sicherheitskritische Fahrzeugsysteme implementieren. In den einzelnen Fahrzeugsystemen kann dann beispielsweise entsprechend dem in der Figur 7 dargestellten Schaltplanausschnitt die elektrische Energie von dem Anschluss B+ oder von dem Anschluss R+ bezogen werden, je nachdem welcher der beiden Anschlüsse eine entsprechende für den Betrieb des Fahrzeugssystems erforderliche elektrische Energie bereitstellen kann. Diesem Fall kann beispielsweise der zweite Generatorausgang (R+) gegebenenfalls zur Abgabe einer geringeren Ausgangsleistung vorgesehen sein, wenn nur die in der Figur 7 dargestellten Fahrzeugsysteme und nicht entsprechend leistungsstarke Lenkgetriebemotoren mit elektrischer Energie versorgt werden brauchen. Dies führt dazu, dass die Gleichrichterelemente D10 bis D16 zur Übertragung von kleineren elektrischen Leistungen ausgelegt werden können und somit die Wärmeverluste an den entsprechenden Gleichrichterelementen D10 bis D16 minimiert werden können oder alternativ auch wieder um die elektrischen bzw. elektronischen Schalter zum Beispiel als MOSFET-Halbleiter verändert werden können. Zur Funktionsprüfung der schaltbaren Gleichrichterelemente D1 bis D16, die beispielsweise aus Thyristoren aufgebaut sein oder diese enthalten können, sowie des in den Figuren 3 und 4 dargestellten Abschaltmoduls im Generator 120 werden diese beispielsweise in sporadischen Abständen abgeschaltet und deren tatsächliche Abschaltung überwacht. Auf diese Weise wird sichergestellt, dass der Ausgang des Generators 120 im Falle eines Kurzschlusses (Batterie- oder generatorseitig) jederzeit zuverlässig von der Batterie bzw. der Energiespeicher 115 im Falle des Auftretens eines Defekts im Generator 120 jederzeit zuverlässig von dem Generator 120 getrennt werden kann.

Um selbst im Falle eines Kurzschlusses des an einem der Gleichrichterelemente D1 bis D16 einen Ausfall des Generators 120 zu verhindern, trennen beispielsweise eine zusätzliche Diode oder zwei niederohmige FET-Halbleiter als elektronische Schalter wirkend, den Generator von der Batterie bzw. dem Energiespeicher 115, wie dies in der Figur 3 oder 4 mit dem Abschaltsmodul AM1 bzw. AM2 als Schalter 150 dargestellt ist. Die Diode bzw. der elektronische Schalter (AM 1) können auch außerhalb des Generators 120 bzw. der entsprechenden Kombinationseinheit 235 platziert werden.

Weiterhin können gemäß einem Ausführungsbeispiel sicherheitskritische Systeme des Nutzfahrzeugs 100 sowohl aus dem Energiespeicher 115 als auch vom zweiten Ausgang R+ des Generators 120 bzw. der Kombinationseinheit 235 versorgt werden. Eine Zusatzschaltung entkoppelt zum Beispiel mittels zweier Dioden, wie dies in der Figur 7 mit den Dioden D20 und D21 dargestellt ist, die beiden Spannungsversorgungen und verhindert eine gegenseitige Beeinträchtigung der Verfügbarkeit der beiden Versorgungspfade (220, 230). Bei einem Kurzschluss der Dioden D20 und D21 sorgen die Sicherungen Si1 und Si2, wie dies in dem Schaltplanausschnitt aus der Figur 7 dargestellt ist, oder Widerstände für ein Fortbestehen der Versorgung des jeweiligen sicherheitskritischen Systems sowie eine zuverlässige Trennung zwischen beiden Versorgungspfade (220, 230).

Im Fall einer Überspannung (Load Dump) kann die Batteriespannung durch Abschalten der Gleichrichterelemente D1 bis D16 vor Überspannung geschützt werden. Bei Einsatz eines leistungsstarken Motors am R+-Anschluss kann eine Überspannung infolge eines Load Dump durch ein entsprechendes ansteuern des Motors eliminiert werden. Der Motor (3kW) kann dabei so angesteuert werden, dass er im Stillstand verbleibt. Alternativ dazu können Supressordioden D17, D18, D19 zwischen den jeweiligen Generatoranschlüssen die gegebenenfalls gesperrten Gleichrichterelemente vor schädlicher Überspannung schützen, wie dies in der Figur 3 und 4 näher dargestellt ist.

Figur 8 zeigt ein Ablaufdiagramm eines Ausführungsbeispiels des hier vorgeschlagenen Ansatzes als Verfahren 800 zum Betreiben einer Stromversorgungseinheit gemäß einerm Ausführungsbeispiel. Das Verfahren 800 umfasst einen Schritt 810 des Erkennens eines Defekts in dem elektrischen Energiespeicher und/oder in zumindest einer Leitung der Stromleitungseinheit und einen Schritt 820 des Ansteuerns des den Schalter ansprechend auf den erkannten Defekt, um den elektrischen Energiespeicher von der Schnittstelle zur trennen.

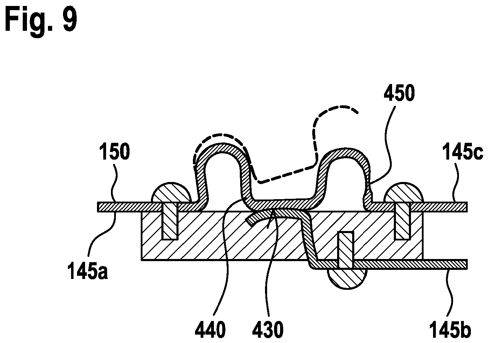

Figur 9 zeigt eine Darstellung als Alternative zu einer Sicherung bzw einem klassischen Schalter 150. Ein vorgespanntes Federblech 440 schließt eine Schaltkontaktfläche, sodass eine mit hohem Strom belastbare Verbindung zwischen Generator und Batterie besteht.

Im Fehlerfall wird über eine Steuerleitung 145c ein Strom eingespeist, sodass das Federblech 440 an einer Engstelle 450 schmilzt. Dadurch entspannt sich das Federblech und öffnet den Schaltkontakt 430. Die Verbindung 150 zwischen der Fahrzeugbatterie 115 und dem Generator 120 ist somit dauerhaft unterbrochen.

### BEZUGSZEICHENLISTE

- 100: Nutzfahrzeug
- 110: Stromversorgungseinheit
- 115: Energiespeicher
- 120: Generator
- 125: Antriebsmotor
- 130: Antriebswelle
- 135: Schnittstelle
- 140: elektrischer Verbraucher
- 140a: Fahrzeuglenkungssystem
- 140b: Fahrerassistenzsystem
- 140c: Motorsteuereinheit
- 140d: Fahrzeugbremse, Fahrzeugbremssteuereinheit
- 145a: Stromleitungseinheit Bordnetz
- 145b: Stromleitungseinheit Redundanz
- 145c: Steuerleitung
- 150: Schalter
- 155: Sensoreinheit
- 160a: erste Lenkachse
- 160b: zweite Lenkachse
- 200: Maschine
- 210: Gleichrichter
- D1 - D16: Gleichrichterelemente
- 220: Leitungen Bordnetzversorgung
- 225: Schaltersteuereinheit
- 230: Leitungen redundante Versorgung
- 235: Kombinationseinheit
- 240: Generatorregler
- 300: Diodenschaltungsanordnung, Suppressorschaltung
- 410, 420: Schaltelemente
- 430: Schaltkontakt
- 440: Federblech
- 450: Engstelle in Blech
- 500: Anlasser
- 510: erster Lenkgetriebemotor
- 520: zweiter Lenkgetriebemotor
- 530: Lenkeinheit, Lenkrad
- 540: Lenkstange
- 800: Verfahren zum Betreiben
- 810: Schritt des Erkennens
- 820: Schritt des Ansteuerns

## Patentansprüche

1. Nutzfahrzeug (100) mit einer Stromversorgungseinheit (110), wobei die Stromversorgungseinheit (110)
- einen elektrischen Energiespeicher (115);
- einen Generator (120),
- eine Schnittstelle (135) zu zumindest einem elektrischen Verbraucher (140) des Nutzfahrzeugs (100);
- eine Stromleitungseinheit (145), die ausgebildet ist, um den Energiespeicher (115) und den Generator (120) mit der Schnittstelle (135) zu verbinden, wobei die Stromleitungseinheit (145) einen Schalter (150) zur elektrischen Trennung des Generators (120) von der Schnittstelle (135) aufweist; und
- eine Sensoreinheit (155) aufweist, die ausgebildet ist, um einen Defekt in dem elektrischen Energiespeicher (115) und/oder in zumindest einer Leitung (220) der Stromleitungseinheit (145) und/oder dem Generator (120) zu erkennen und ansprechend auf den erkannten Defekt den Schalter (150) anzusteuern, um den Generator (120)von der Schnittstelle (135) zur trennen, insbesondere wobei der elektrische Energiespeicher (115) mit der Schnittstelle (135) elektrisch verbunden bleibt,
**dadurch gekennzeichnet, dass**
das Nutzfahrzeug (100) zwei lenkbare Achsen (160a, 160b) aufweist, deren Auslenkung je mittels eines Lenkgetriebemotors (510, 520) bewirkt wird, wobei ein Lenkgetriebemotor (520) einer ersten der lenkbaren Achse (160b) bei geöffnetem Schalter (150) mit elektrischer Energie von dem Generator (120) versorgt wird und ein Lenkgetriebemotor (510) der zweiten der lenkbaren Achsen (520) mit dem elektrischen Energiespeicher (115) elektrisch gekoppelt ist.

2. Nutzfahrzeug (100) gemäß Anspruch 1, **dadurch gekennzeichnet, dass** der elektrische Energiespeicher (115) als elektrochemischer Energiespeicher (115) und/oder als Akkumulator, insbesondere als Fahrzeugbatterie des Nutzfahrzeugs (100), ausgebildet ist.

3. Nutzfahrzeug (100) gemäß einem der vorangegangenen Ansprüche, **dadurch gekennzeichnet, dass** der Generator (120) als Drehstromgenerator ausgebildet ist und/oder mit einer Antriebswelle eines Antriebsmotors (125) des Nutzfahrzeugs (100) gekoppelt oder koppelbar ist, insbesondere wobei der Generator (120) einen Gleichrichter (210) zur Einspeisung von Gleichstrom auf zumindest eine Leitung der Stromleitungseinheit (145) aufweist.

4. Nutzfahrzeug (100) gemäß einem der vorangegangenen Ansprüche, dadurch gekennzeichent, dass der Schalter (150) zumindest ein Relais und/oder ein Halbleiterschaltelement (AM1, AM2, 410, 420) als Schaltelement aufweist.

5. Nutzfahrzeug (100) gemäß Anspruch 4, **dadurch gekennzeichnet, dass** der Schalter (150) zumindest zwei in Reihe geschaltete Schaltelemente (410, 420, AM2) aufweist, insbesondere wobei die Schaltelemente unabhängig voneinander ansteuerbar sind.

6. Nutzfahrzeug (100) gemäß einem der vorangegangenen Ansprüche, **dadurch gekennzeichnet, dass** die Stromleitungseinheit (145) zwei voneinander durch den Schalter (150) trennbare Stromleitungen (220) aufweist und wobei die Schnittstelle (135) ausgebildet ist, um einen ersten der Verbraucher (140) mit Strom aus dem elektrischen Energiespeicher (115) zu versorgen und einen zweiten Verbraucher (140) mit elektrischer Energie aus dem Generator (120) zu versorgen.

7. Nutzfahrzeug (100) gemäß einem der vorangegangenen Ansprüche, **dadurch gekennzeichnet, dass** die Sensoreinheit (155) ausgebildet ist, um als Defekt einen Kurzschluss in dem elektrischen Energiespeicher (115) und/oder einer Leitung der Stromleitungseinheit (145) und/oder dem Generator (120) zu erkennen.

8. Nutzfahrzeug (100) gemäß einem der vorangegangenen Ansprüche, **dadurch gekennzeichnet, dass** die Sensoreinheit (155) ausgebildet ist, um einen Überladungspannungszustand zumindest einer Leitung (220) der Stromleitungseinheit (145) zu erkennen, der zu einer Überladung des elektrischen Energiespeichers (115) führt, wobei die Sensoreinheit (155) ferner ausgebildet ist, um beim Erkennen des Überlasungszustand den Schalter (150) derart anzusteuern, dass der Generator (120) von dem elektrischen Energiespeicher (115) getrennt wird.

9. Nutzfahrzeug (100) gemäß einem der vorangegangenen Ansprüche, wobei die erste lenkbare Achse (160b) mechanisch mit der zweiten lenkbaren Achse (160a) gekoppelt ist, insbesondere wobei die lenkbaren Achsen (160a, 160b) derart gekoppelt ist, dass eine Lenkbewegung der ersten Achse (160b) zu einer gleichen Lenkbewegung der zweiten Achse (160a) führt.

10. Nutzfahrzeug (100) gemäß einem der vorangegangenen Ansprüche, **dadurch gekennzeichnet, dass** die Schnittstelle (135) ausgebildet ist, zumindest zwei Verbraucher (140, 510, 520) mit je einer Leitung zu dem elektrischen Energiespeicher (115) und dem Generator (120) zu verbinden.

11. Verfahren (800) zum Betreiben eines Nutzfahrzeugs (100) gemäß einem der vorangegangenen Ansprüche, wobei das Verfahren die folgenden Schritte aufweist:
- Erkennen (810) eines Defekts in dem elektrischen Energiespeicher (115), dem Generator (120) und/oder in zumindest einer Leitung der Stromleitungseinheit (145);
- Ansteuern (820) des Schalters (150) ansprechend auf den erkannten Defekt, um den Generator (120) von der Schnittstelle (135) zur trennen, insbesondere wobei der elektrische Energiespeicher (115) mit der Schnittstelle (135) elektrisch verbunden bleibt; und
- Versorgen eines Lenkgetriebemotors (520) einer ersten (160b) der lenkbaren Achsen bei geöffnetem Schalter (150) mit elektrischer Energie von dem Generator (120) und elektrisches Koppeln eines Lenkgetriebemotors (510) der zweiten (520) der lenkbaren Achsen mit dem elektrischen Energiespeicher (115).

## Claims

1. Utility vehicle (100) having a power supply unit (110), wherein the power supply unit (110) has
- an electrical energy store (115);
- a generator (120),
- an interface (135) to at least one electrical load (140) of the utility vehicle (100);
- a power line unit (145) designed to connect the energy store (115) and the generator (120) to the interface (135), wherein the power line unit (145) has a switch (150) for electrically isolating the generator (120) from the interface (135); and
- a sensor unit (155) designed to detect a fault in the electrical energy store (115) and/or in at least one line (220) of the power line unit (145) and/or in the generator (120) and to respond to the detected fault by actuating the switch (150) in order to isolate the generator (120) from the interface (135), in particular wherein the electrical energy store (115) remains electrically connected to the interface (135),
**characterized in that**
the utility vehicle (100) has two steerable axles (160a, 160b) the deflection of which is caused in each case by means of a steering transmission motor (510, 520), wherein a steering transmission motor (520) of a first of the steerable axle (160b) is supplied with electrical energy by the generator (120) when the switch (150) is open, and a steering transmission motor (510) of the second of the steerable axles (520) is electrically coupled to the electrical energy store (115).

2. Utility vehicle (100) according to Claim 1, **characterized in that** the electrical energy store (115) is in the form of an electrochemical energy store (115) and/or in the form of a storage battery, in particular in the form of a vehicle battery of the utility vehicle (100).

3. Utility vehicle (100) according to either of the preceding claims, **characterized in that** the generator (120) is in the form of a three-phase generator and/or is coupled or couplable to a driveshaft of a drive motor (125) of the utility vehicle (100), in particular wherein the generator (120) has a rectifier (210) for supplying DC current to at least one line of the power line unit (145).

4. Utility vehicle (100) according to one of the preceding claims, **characterized in that** the switch (150) has at least one relay and/or a semiconductor switching element (AM1, AM2, 410, 420) as switching element.

5. Utility vehicle (100) according to Claim 4, **characterized in that** the switch (150) has at least two series-connected switching elements (410, 420, AM2), in particular wherein the switching elements are actuatable independently of one another.

6. Utility vehicle (100) according to one of the preceding claims, **characterized in that** the power line unit (145) has two power lines (220) isolable from one another by the switch (150) and wherein the interface (135) is designed to supply a first of the loads (140) with current from the electrical energy store (115) and to supply a second load (140) with electrical energy from the generator (120).

7. Utility vehicle (100) according to one of the preceding claims, **characterized in that** the sensor unit (155) is designed to detect a short in the electrical energy store (115) and/or in a line of the power line unit (145) and/or in the generator (120) as a fault.

8. Utility vehicle (100) according to one of the preceding claims, **characterized in that** the sensor unit (155) is designed to detect an overload voltage state of at least one line (220) of the power line unit (145) leading to an overload of the electrical energy store (115), wherein the sensor unit (155) is further designed so as, on detecting the overload state, to actuate the switch (150) such that the generator (120) is isolated from the electrical energy store (115).

9. Utility vehicle (100) according to one of the preceding claims, wherein the first steerable axle (160b) is mechanically coupled to the second steerable axle (160a), in particular wherein the steerable axles (160a, 160b) is coupled such that a steering movement of the first axle (160b) leads to an identical steering movement of the second axle (160a).

10. Utility vehicle (100) according to one of the preceding claims, **characterized in that** the interface (135) is designed to connect at least two loads (140, 510, 520) to the electrical energy store (115) and the generator (120) by means of one line each.

11. Method (800) for operating a utility vehicle (100) according to one of the preceding claims, wherein the method has the following steps:
- detecting (810) a fault in the electrical energy store (115), in the generator (120) and/or in at least one line of the power line unit (145);
- actuating (820) the switch (150) in response to the detected fault in order to isolate the generator (120) from the interface (135), in particular wherein the electrical energy store (115) remains electrically connected to the interface (135); and
- supplying a steering transmission motor (520) of a first (160b) of the steerable axles with electrical energy by the generator (120) when the switch (150) is open, and electrically coupling a steering transmission motor (510) of the second (520) of the steerable axles to the electrical energy store (115).

## Revendications

1. Véhicule (1) utilitaire comprenant une unité (110) d'alimentation au courant, l'unité (110) d'alimentation en courant comportant
- un accumulateur (115) d'énergie électrique ;
- un générateur (120),
- une interface (135) avec au moins un consommateur (140) électrique du véhicule (100) utilitaire ;
- une unité (145) de conduction du courant, qui est constituée pour relier l'accumulateur (115) d'énergie et le générateur (120) à l'interface (135), l'unité (145) de conduction du courant ayant un interrupteur (150) pour la séparation électrique du générateur (120) de l'interface (135) et
- une unité (155) à capteur, qui est constituée pour détecter un défaut de l'accumulateur (115) d'énergie électrique et/ou d'au moins une ligne (220) de l'unité (145) de conduction du courant et/ou du générateur (120) et pour, en réaction à la constatation du défaut, commander l'interrupteur (150), afin de séparer le générateur (120) de l'interface (135), dans lequel notamment l'accumulateur (115) d'énergie électrique reste relié électriquement à l'interface (135),
**caractérisé en ce que**
le véhicule (100) utilitaire a deux essieux (160a, 160b) directeurs, dont l'orientation est obtenue respectivement au moyen d'un moteur (510, 520) à mécanisme de direction, un moteur (520) à mécanisme de direction d'un premier des essieux (160b) directeurs étant alimenté en énergie électrique par le générateur (120) lorsque l'interrupteur (150) est ouvert et un moteur (510) à mécanisme de direction du deuxième des essieux (520) directeurs étant connecté électriquement à l'accumulateur (115) d'énergie électrique.

2. Véhicule (100) utilitaire suivant la revendication 1, **caractérisé en ce que** l'accumulateur (115) d'énergie électrique est constitué sous la forme d'un accumulateur (115) électrochimique d'énergie et/ou sous la forme d'un accumulateur, notamment d'une batterie du véhicule (100) utilitaire.

3. Véhicule (100) utilitaire suivant l'une des revendications précédentes, **caractérisé en ce que** le générateur (120) est constitué sous la forme d'un générateur à courant triphasé et/ou est accouplé à un arbre d'entraînement d'un moteur (125) d'entraînement du véhicule (100) utilitaire ou peut l'être, dans lequel notamment le générateur (120) a un redresseur (210) pour l'alimentation en courant continu d'au moins une ligne de l'unité (145) de conduction du courant.

4. Véhicule (100) utilitaire suivant l'une des revendications précédentes, **caractérisé en ce que** l'interrupteur (150) a au moins un relais et/ou un élément (AM1, AM2, 410, 420) de commutation à semi-conducteur comme élément de commutation.

5. Véhicule (100) utilitaire suivant la revendication 4, **caractérisé en ce que** l'interrupteur (150) a au moins deux éléments (410, 420, AM2) de commutation montés en série, dans lequel notamment les éléments de commutation peuvent être commandés indépendamment l'un de l'autre.

6. Véhicule (100) utilitaire suivant l'une des revendications précédentes, **caractérisé en ce que** l'unité (145) de conduction du courant a deux lignes (220) de courant pouvant être séparées l'une de l'autre par l'interrupteur (150) et dans lequel l'interface (135) est constituée pour alimenter un premier des consommateurs (140) en courant à partir de l'accumulateur (115) d'énergie électrique et pour alimenter un deuxième consommateur (140) en énergie électrique à partir du générateur (120).

7. Véhicule (100) utilitaire suivant l'une des revendications précédentes, **caractérisé en ce que** l'unité (155) à capteur est constituée pour détecter comme défaut un court-circuit dans l'accumulateur (115) d'énergie électrique et/ou dans une ligne de l'unité (145) de conduction du courant et/ou dans le générateur (120).

8. Véhicule (100) utilitaire suivant l'une des revendications précédentes, **caractérisé en ce que** l'unité (155) à capteur est constituée pour détecter un état de tension de surcharge d'au moins une ligne (220) de l'unité (145) de conduction du courant qui donne une surcharge de l'accumulateur (115) d'énergie électrique, dans lequel l'unité (165) à capteur est constituée en outre pour, lorsque l'état de surcharge est détecté, commander l'interrupteur (150) de manière à séparer le générateur (120) de l'accumulateur (115) d'énergie électrique.

9. Véhicule (100) utilitaire suivant l'une des revendications précédentes, dans lequel le premier essieu (160b) directeur est accouplé mécaniquement au deuxième essieu (160a) directeur dans lequel notamment les essieux (160a, 160b) directeurs sont accouplés de manière à ce qu'un mouvement de direction du premier essieu (160b) donne un même mouvement de direction du deuxième essieu (160a).

10. Véhicule (100) utilitaire suivant l'une des revendications précédentes, **caractérisé en ce que** l'interface (135) est constituée pour relier au moins deux consommateurs (140, 510, 520) à respectivement une ligne menant à l'accumulateur (115) d'énergie électrique et au générateur (120).

11. Procédé (800) pour faire fonctionner un véhicule (100) utilitaire suivant l'une des revendications précédentes, dans lequel le procédé a des stades suivants :
- Détection (810) d'un défaut dans l'accumulateur (115) d'énergie électrique, dans le générateur (120) et/ou dans au moins une ligne de l'unité (145) de conduction du courant ;
- Commande (820) de l'interrupteur (150) en réaction à la détection du défaut, afin de séparer le générateur (120) de l'interface (135), dans lequel notamment l'accumulateur (115) d'énergie électrique reste connecté électriquement à l'interface (135) et
- Alimentation en énergie électrique par le générateur (120) d'un moteur (520) à mécanisme de direction d'un premier (160b) des essieux directeurs, lorsque l'interrupteur (150) est ouvert et connexion électrique d'un moteur (510) à mécanisme de direction du deuxième (520) des essieux directeurs à l'accumulateur (115) d'énergie électrique.
